# EUROPEAN PATENT SPECIFICATION

(11) **EP 2 137 286 B1**
(45) Date of publication and mention of the grant of the patent: **16.06.2010**
(21) Application number: 08733482.7
(22) Date of filing: 17.04.2008
(51) Int. Cl.: C11C 5/00, C11C 5/02

(54) **METHOD FOR PRODUCTION OF CANDLES**
VERFAHREN ZUR HERSTELLUNG VON KERZEN
PROCÉDÉ DE FABRICATION DE BOUGIES

(30) Priority: 17.04.2007 BE 200700184
(43) Date of publication of application: 30.12.2009
(73) Proprietor: Spaas Kaarsen, 3930 Hamont-Achel (BE)
(72) Inventor: WAGENAAR, Bertus, Michiel, B-3930 Hamont-Achel (BE); VAN NULAND, Dimitri c/o Spaas Kaarsen, 3930 Hamont - Achel (BE)
(74) Representative: Van Reet, Joseph
(86) International application number: PCT/BE2008/000029
(87) International publication number: WO 2008/124897

(56) References cited:
- DE-A1- 19 601 521
- US-A- 5 171 329

## Description

Current candle production technology results in high operating costs and is often inflexible in relation to the type of raw material that can be processed.

The casting process is a common process in which the raw material is supplied in fluid form. Then the cooling heat and crystallisation heat must be dissipated to give the candle sufficient rigidity for the subsequent process treatment such as packing. However cooling a cast candle with a relatively large diameter, for example a diameter of 70 mm, takes several hours, which results in high production cost for such candles. In addition during cooling shrinkage occurs, and the crystallisation process can lead to local crystallisation patterns on the surface. US-A-5171329 discloses a method for manufacturing a candle, wherein the butter oil is added to a solidified oil and mixed therewith to become solidified and form a wax-like state of fat which serves as the material of a candle.

Another process is compressing a pulverized raw material. One problem with this process is not that every raw material can be compressed well. Hardened stearin powder or hardened fat granulate cannot in practice be compressed into a sufficiently rigid candle. Solutions such as the addition of plastic substances increase the cost price of the candle. In addition pulverization of the fluid raw material by means of cooled drums or spray chambers is a costly pre-treatment step. The same reason applies to the extrusion of candles from the pulverized fuel.

The object of the invention is the preparation of a new type of candle raw material which hardens quickly, while in the hardening step a small quantity of heat or preferably almost no heat must be dissipated.

In this way arbitrary candle forms can be cast and because of the short cooling time, with a production device of limited size, large production volumes can be achieved.

According to the invention the new type of candle raw material known as candle sludge comprises at least two components which are not thermally balanced. Before mixing of the two components, the first fuel component has a first temperature at which this fuel component is too plastic or too fluid to be processed into a candle without further cooling. The second fuel component has a lower temperature so that this functions as a cooling medium to accelerate the hardening or setting of the first fuel component.

The first fuel component is preferably a warm, fluid mass which may be partly crystallised, wherein the crystallisation percentage can vary between 0 and 100 w.%. The second fuel component is preferably a colder, solid mass which is preferably pulverized and/or granulated into a granulate. Thorough mixing of the two constituents gives a mixture that can be formed as long as the warm fluid coating has not set around the cold grains. Colours and fragrances can be added to both phases. The heat exchange process between the warm plastic mass and the cold granulate is characterised by a length dimension which is proportional to the grain or granulate diameter. Preferably the solid, granular fuel component has a mean particle size which is smaller than 30 mm, preferably smaller than 10 mm and more preferably smaller than 2 mm, wherein the mean particle size of the solid granular fuel component is preferably greater than 0.001 mm, more preferably greater than 0.1 mm. The mean particle size is thus preferably included between 0.1 and 10 mm, more preferably between 0.2 and 2 mm, and even more preferably between 0.3 and 1.5 mm. The smaller the granulate diameter, the faster the heat exchange. The granulate particularly preferably has a mean particle size which is less than 1 mm. The characteristic length of the heat transfer process is then small and the specific heat exchange surface is large. Thus the hardening process takes place in a short period, whereby large production volumes can be obtained per unit process equipment.

The granular fuel component preferably has a melting point measured to ASTM 938 which is lower than the temperature of the first fluid fuel component. The granular fuel component here partly melts after mixing with the first fuel component during hardening or setting of the first fuel component and can thus extract more heat from the first fuel component. The granular fuel component preferably has a melting point measured to ASTM 938 which is lower than or equal to the melting point of the first fuel component also measured to ASTM 938.

To be able to accelerate the hardening process further, on production of the candles hollow channels can be provided through which a coolant (gas or liquid) can flow.

In a preferred embodiment the temperature of the second fuel component, before mixing the fuel components, is at least 5, preferably at least 10, more preferably at least 15 and highly preferably at least 20°C lower than the melting point of the first fuel component. The temperature of the first fuel component is for example 45 to 65° Celsius while the temperature of the second fuel component is for example -30 to +30° Celsius. The second fuel component can for example be adapted approximately to ambient temperature. Per 100 weight parts of fuel component mixture, preferably 5 to 90 weight parts, more preferably 20 to 80 weight parts of the second fuel component are used. If the fuel mixture is extruded, of a total of 100 weight parts preferably 50 to 75 weight parts of the second fuel component are used.

A gas can be incorporated in one or more of the fuel components or in the mixture thereof in order to achieve a density reduction. The fuel components can comprise paraffin, fatty acids, fat and a low molecular polymer and/or gelling agents or mixtures thereof. In addition to the first and second fuel components described above, further fuel components may be used. These can either form a further first fuel component which is too plastic or too fluid to be processed without cooling into a candle, or a further second fuel component which has a lower temperature than the first fuel component(s), whereby this further second fuel component also functions as a cooling means to bring the first fuel component(s) to hardening or setting.

The sludge mixture, with a rheology which shows some similarity to toothpaste or dough, can be processed into in many forming machines. Non-limitative examples are:
- the free outflow from an opening or tube whereby an extruded candle form is obtained
- the filling of moulds such as tea-light holders or glazed moulds
- as a feed from a 3D printer
- as a feed for single or multi-screw extruders or co-extrusion machines.

Subsequent processing stages such as smoothing of the candle surface or printing of the candle surface are provided.

Some non-limitative examples are given below.

### Example 1

First the first fuel component was produced by bringing 0.65 kg stearin 0436 by Oleon to a temperature of 60° Celsius, which is just above the setting point of this stearin. The second fuel component consists of 0.35 kg of a powder of the same stearin 0436 by Oleon with a temperature of 20°Celsius and the grains of which have a mean diameter of 0.65 millimetres. By means of a mixing and kneading device, the two fuel components are intensively mixed for 60 seconds, forming a paste-like mixture. This mixture is pressed into a cylindrical mould with a diameter of 50 millimetres which is fitted with a wick placed on the centre line. After 10 minutes cooling in air, the hardened candle can be removed from the mould.

### Example 2

First the first fuel component is produced by bringing paraffin 5803 from Exxon to a temperature of 62° Celsius, which is just above the setting point of this paraffin. The second fuel component consists of a powder of the same paraffin 5803 from Exxon with a temperature of 20° Celsius and a mean grain diameter of 0.65 millimetres.

First the cold, solid powder is bought into the extrusion screw, after which the fluid is admixed in an axially downstream position. The extrusion mixture leaves the extruder at the screw end and then passes through a cold liquid bath at 15° Celsius in order to create directly a hard candle skin.

It is noted that the axial feed positions for both fuel components can be varied along the extruder shaft and are even interchangeable.

## Claims

1. Method for producing candles, **characterised in that** at least a first and a second fuel component are mixed together which before mixing each have a different temperature, and which are the same or different in chemical composition, wherein
- the first fuel component has a first temperature at which this is too plastic or fluid to be able without cooling to be processed and packed as a candle, and
- the second fuel component has a lower temperature, whereby this functions as a cooling means in order to bring the first fuel component to hardening or setting.

2. Method according to claim 1, **characterised in that** the first fuel component comprises a warm fluid melt while the second fuel component comprises a solid granular fuel component which is colder than the first fuel component and thus brings the first fuel component to hardening or setting.

3. Method according to claim 2, **characterised in that** the second fuel component has a melting point measured to ASTM 938 which is lower than the first said temperature.

4. Method according to claim 2 or 3, **characterised in that** the second fuel component has a melt point measured to ASTM 938 which is lower than or equal to the melt point of the first fuel component, also measured to ASTM 938.

5. Method according to any of claims 2 to 4, **characterised in that** the granular fuel component after mixing with the first fuel component partly melts during the hardening or setting of the first fuel component.

6. Method according to any of claims 2 to 5, **characterised in that** the solid granular fuel component has a mean particle size which is smaller than 30 mm, preferably smaller than 10 mm and more preferably smaller than 2 mm, wherein the mean particle size of the solid granular fuel component is preferably greater than 0.001 mm, more preferably greater than 0.1 mm.

7. Method according to any of claims 1 to 6, **characterised in that** per 100 weight parts fuel component mixture, 5 to 90 weight parts, preferably 20 to 80 weight parts of the second fuel component are used.

8. Method according to any of claims 1 to 7, **characterised in that** colourings and fragrances and one or more wicks are added to one or both fuel components.

9. Method according to any of claims 1 to 8, **characterised in that** each of the two fuel components comprises one or more components selected from the group containing paraffin, fatty acids, fat and low molecular polymer and/or gelling agents.

10. Method according to any of the preceding claims, **characterised in that** a gas is also incorporated in order to obtain a density reduction.

11. Method according to any of the preceding claims, **characterised in that** the second fuel component is cooled cryogenically before mixing.

12. Method according to any of claims 1 to 11, **characterised in that** before mixing the two fuel components, the temperature of the second fuel component is at least 5, preferably at least 10, more preferably at least 15 and highly preferably at least 20°C lower than the melting point of the first fuel component measured to ASTM 938.

13. Method according to any of claims 1 to 12, **characterised in that** the fuel component mixture is processed in an extruder, in a candle casting machine or in a 3D printer, wherein one or more wicks are introduced into the mixture and wherein subsequent cooling may be applied in order to harden the skin of the candle in a short time.

14. Method according to any of claims 1 to 13, **characterised in that** the fuel component mixture is co-extruded, wherein optionally hollow channels are introduced or a foam or powder filling of internal parts of the extruded candle.

15. Method according to any of claims 1 to 14, **characterised in that** a device is used with two or more process parts, wherein the first process part is intended for the homogenous mixing of the two fuel components and the second process part for the forming process of the candle, and wherein further process parts may follow or be interposed which concern subsequent processing stages or heat transfer stages.

16. Method according to any of claims 1 to 15, **characterised in that** on production of the candles hollow channels are provided in the candles through which a cooling medium can flow so that the residual heat in the candle body is dissipated more quickly.

## Patentansprüche

1. Verfahren zur Herstellung von Kerzen, **dadurch gekennzeichnet, dass** zumindest eine erste und eine zweite Brennstoffkomponente miteinander vermischt werden, die vor dem Mischen jeweils eine andere Temperatur haben und deren chemische Zusammensetzung gleich oder unterschiedlich ist, wobei
- die erste Brennstoffkomponente eine erste Temperatur hat, bei der sie zu plastisch oder flüssig ist, um ohne Abkühlen verarbeitet und als eine Kerze kompaktiert zu werden, und
- die zweite Brennstoffkomponente eine niedrigere Temperatur hat, wodurch sie als Kühlmittel fungiert, um die erste Brennstoffkomponente zum Aushärten oder Erstarren zu bringen.

2. Verfahren nach Anspruch 1, **dadurch gekennzeichnet, dass** die erste Brennstoffkomponente eine warme flüssige Schmelze umfasst, während die zweite Brennstoffkomponente eine feste gekörnte Brennstoffkomponente umfasst, die kälter als die erste Brennstoffkomponente ist und daher die erste Brennstoffkomponente zum Aushärten oder Erstarren bringt.

3. Verfahren nach Anspruch 2, **dadurch gekennzeichnet, dass** die zweite Brennstoffkomponente einen Schmelzpunkt gemessen nach ASTM 938 hat, der niedriger als die erwähnte erste Temperatur ist.

4. Verfahren nach Anspruch 2 oder 3, **dadurch gekennzeichnet, dass** die zweite Brennstoffkomponente einen Schmelzpunkt gemessen nach ASTM 938 hat, der niedriger als oder gleich hoch wie der Schmelzpunkt der ersten Brennstoffkomponente ist, ebenfalls gemessen nach ASTM 938.

5. Verfahren nach irgendeinem der Ansprüche 2 bis 4, **dadurch gekennzeichnet, dass** die gekörnte Brennstoffkomponente nach dem Mischen mit der ersten Brennstoffkomponente während des Aushärtens oder Erstarrens der ersten Brennstoffkomponente teilweise schmilzt.

6. Verfahren nach irgendeinem der Ansprüche 2 bis 5, **dadurch gekennzeichnet, dass** die feste gekörnte Brennstoffkomponente eine mittlere Partikelgröße hat, die kleiner ist als 30 mm, vorzugsweise kleiner als 10 mm und noch besser kleiner als 2 mm ist, wobei die mittlere Partikelgröße der festen gekörnten Brennstoffkomponente vorzugsweise größer als 0,001 mm, noch besser größer als 0,1 mm ist.

7. Verfahren nach irgendeinem der Ansprüche 1 bis 6, **dadurch gekennzeichnet, dass** pro 100 Gewichtsteile Brennstoffmischung 5 bis 90 Gewichtsteile, vorzugsweise 20 bis 80 Gewichtsteile der zweiten Brennstoffkomponente verwendet werden.

8. Verfahren nach irgendeinem der Ansprüche 1 bis 7, **dadurch gekennzeichnet, dass** Färbemittel und Duftstoffe und ein oder mehrere Dochte zu einer oder beiden Brennstoffkomponenten hinzugefügt werden.

9. Verfahren nach irgendeinem der Ansprüche 1 bis 8, **dadurch gekennzeichnet, dass** jede der beiden Brennstoffkomponenten eine oder mehrere Komponenten umfasst, die aus der Gruppe bestehend aus Paraffin, Fettsäuren, Fett und niedrig molekularem Polymer und/oder Geliermitteln ausgewählt werden.

10. Verfahren nach irgendeinem der vorigen Ansprüche, **dadurch gekennzeichnet, dass** auch ein Gas zugesetzt wird, um eine Senkung der Dichte zu erreichen.

11. Verfahren nach irgendeinem der vorigen Ansprüche, **dadurch gekennzeichnet, dass** die zweite Brennstoffkomponente vor dem Mischen kryogen gekühlt wird.

12. Verfahren nach irgendeinem der Ansprüche 1 bis 11, **dadurch gekennzeichnet, dass** die Temperatur der zweiten Brennstoffkomponente vor dem Mischen der beiden Brennstoffkomponenten mindestens 5, vorzugsweise mindestens 10, noch besser mindestens 15 und am besten mindestens 20 °C unter dem Schmelzpunkt der ersten Brennstoffkomponente gemessen nach ASTM 938 liegt.

13. Verfahren nach irgendeinem der Ansprüche 1 bis 12, **dadurch gekennzeichnet, dass** die Brennstoffkomponentenmischung in einem Extruder, in einer Kerzengussmaschine oder in einem 3D-Drucker verarbeitet wird, worin ein oder mehrere Dochte in die Mischung eingeführt werden und worin nachfolgende Kühlung angewendet werden kann, um die Haut der Kerze in kurzer Zeit zu härten.

14. Verfahren nach irgendeinem der Ansprüche 1 bis 13, **dadurch gekennzeichnet, dass** die Brennstoffkomponentenmischung coextrudiert wird, wobei optional hohle Kanäle eingeführt werden oder eine Schaum- oder Pulverfüllung interner Teile der extrudierten Kerze.

15. Verfahren nach irgendeinem der Ansprüche 1 bis 14, **dadurch gekennzeichnet, dass** ein Gerät mit zwei oder mehr Prozessteilen verwendet wird, wobei das erste Prozessteil für die homogene Mischung der zwei Brennstoffkomponenten vorgesehen ist und das zweite Prozessteil für den Formprozess der Kerze, und wobei weitere Prozessteile folgen oder eingefügt werden können, die nachfolgende Prozessphasen oder Wärmeübertragungsphasen betreffen.

16. Verfahren nach irgendeinem der Ansprüche 1 bis 15, **dadurch gekennzeichnet, dass** bei der Herstellung der Kerzen hohle Kanäle in den Kerzen vorgesehen sind, durch die ein Kühlmedium fließen kann, sodass die Restwärme im Kerzenkörper schneller abgeführt wird.

## Revendications

1. Procédé pour produire des bougies, **caractérisé en ce qu'**au moins un premier et un deuxième composant combustible sont mélangés ensemble, lesquels ont chacun, avant le mélange, une température différente et lesquels sont de composition chimique identique ou différente, dans lequel
le premier composant combustible a une première température à laquelle celui-ci est trop plastique ou fluide pour être capable sans refroidissement d'être traité et emballé comme une bougie, et
le deuxième composant combustible a une température plus basse, raison pour laquelle celui-ci fonctionne comme un moyen de refroidissement afin d'amener le premier composant combustible à durcir ou prendre.

2. Procédé selon la revendication 1, **caractérisé en ce que** le premier composant combustible consiste en une masse fondue fluide chaude, tandis que le deuxième composant consiste en un composant combustible granulaire solide qui est plus froid que le premier composant combustible et amène, par conséquent, le premier composant combustible à durcir ou prendre.

3. Procédé selon la revendication 2, **caractérisé en ce que** le deuxième composant combustible a un point de fusion, mesuré selon ASTM 938, qui est inférieur ladite première température.

4. Procédé selon la revendication 2 ou 3, **caractérisé en ce que** le deuxième composant combustible a un point de fusion, mesuré selon ASTM 938, qui est inférieur ou égae au point de fusion du premier composant combustible, également mesuré selon ASTM 938.

5. Procédé selon l'une quelconque des revendications 2 à 4, **caractérisé en ce que** le composant combustible granulaire, après avoir été mélangé avec le premier composant combustible, fond en partie pendant le durcissement ou la prise du premier composant combustible.

6. Procédé selon l'une quelconque des revendications 2 à 5, **caractérisé en ce que** le composant combustible granulaire solide a une taille moyenne de particule qui est inférieure à 30 mm, de préférence inférieure à 10 mm et mieux encore inférieure à 2 mm, dans lequel la taille moyenne de particule du composant combustible granulaire solide est de préférence supérieure à 0,001 mm, mieux encore supérieure à 0,1 mm.

7. Procédé selon l'une quelconque des revendications 1 à 6, **caractérisé en ce que** par 100 parts en poids du mélange de composants combustibles, de 5 à 90 parts en poids, de préférence de 20 à 80 parts en poids du deuxième composant combustible sont utilisées.

8. Procédé selon l'une quelconque des revendications 1 à 7, **caractérisé en ce que** des couleurs et des parfums et une ou plusieurs mèches sont ajoutés à un ou aux deux composants combustibles.

9. Procédé selon l'une quelconque des revendications 1 à 8, **caractérisé en ce que** chacun des deux composants combustibles comprend un ou plusieurs composants choisis dans le groupe consistant en paraffine, acides gras, graisse et polymère à faible poids moléculaire et / ou agents gélifiants.

10. Procédé selon l'une quelconque des revendications précédentes, **caractérisé en ce qu'**un gaz est également incorporé afin d'obtenir une réduction de densité.

11. Procédé selon l'une quelconque des revendications précédentes, **caractérisé en ce que** le deuxième composant combustible est refroidi cryogéniquement avant le mélange.

12. Procédé selon l'une quelconque des revendications 1 à 11, **caractérisé en ce que**, avant de mélanger les deux composants combustibles, la température du deuxième composant combustible est d'au moins 5, de préférence d'au moins 10, mieux encore d'au moins 15 et idéalement d'au moins 20° C inférieure au point de fusion du premier composant combustible mesuré selon ASTM 938.

13. Procédé selon l'une quelconque des revendications 1 à 12, **caractérisé en ce que** le mélange de composants combustibles est traité dans une extrudeuse, dans une machine de moulage de bougie ou dans une imprimante 3D, dans lequel une ou plusieurs mèches sont introduites dans le mélange et dans lequel un refroidissement subséquent peut être appliqué afin de durcir la peau de la bougie en un temps court.

14. Procédé selon l'une quelconque des revendications 1 à 13, **caractérisé en ce que** le mélange de composants combustibles est co-extrudé, dans lequel des canaux creux sont facultativement introduits et une mousse ou une matière pulvérulente de remplissage de parties internes de la bougie extrudée.

15. Procédé selon l'une quelconque des revendications 1 à 14, **caractérisé en ce qu'**un dispositif est utilisé avec deux parties de traitement, dans lequel la première partie de traitement est destinée au mélange homogène des deux composants combustibles et la deuxième partie de traitement au processus de formage de la bougie, et dans lequel des parties de traitement supplémentaires peuvent suivre ou être intercalées, lesquelles concernent des étapes de traitement subséquentes ou des étapes de transfert de chaleur.

16. Procédé selon l'une quelconque des revendications 1 à 15, **caractérisé en ce que**, lors de la production des bougies, des canaux creux sont prévus dans les bougies, canaux par lesquels un agent de refroidissement peut couler afin que la chaleur résiduelle dans le corps de bougie soit dissipée plus rapidement.
